# EUROPÄISCHE PATENTSCHRIFT

(11) **EP 1 462 329 B1**
(45) Veröffentlichungstag und Bekanntmachung des Hinweises auf die Patenterteilung: **13.07.2011**
(21) Anmeldenummer: 04006768.8
(22) Anmeldetag: 20.03.2004
(51) Int. Cl.: B60T 1/06, F16D 65/38, B60K 17/04, B60B 35/16

(54) **Niederflurfahrzeugportalachse**
Axle for a low-floor vehicle
Essieu pour véhicule surbaissé

(30) Priorität: 26.03.2003 DE 10313485
(43) Veröffentlichungstag der Anmeldung: 29.09.2004
(73) Patentinhaber: ZF Friedrichshafen AG, 88038 Friedrichshafen (DE)
(72) Erfinder: Eickhoff, Mathias, 94081 Fürstenzell (DE); Wimmer, Hans, 94127 Neuburg (Inn) (DE); Enderl, Alexander, 94474 Vilshofen (DE)

(56) Entgegenhaltungen:
- EP-A- 0 523 472
- WO-A-01/03964
- WO-A-97/28980
- DE-A- 3 027 806
- DE-A- 19 709 577
- DE-C- 19 822 606

## Beschreibung

Die vorliegende Erfindung betrifft eine Portalachse für ein Niederflurfahrzeug gemäß dem Oberbegriff des Patentanspruchs 1.

Insbesondere bei Nahverkehrsbussen sowie Stadtbussen ist eine möglichst niedrige Flurhöhe wünschenswert, um den Fahrgästen ein bequemes und zügiges Ein- und Aussteigen zu ermöglichen. Hierfür werden Portalachsen eingesetzt, bei welchen die Achswellen gegenüber den Radachsen um einen bestimmten Abstand, der sogenannten Portaltiefe, versetzt sind. Dieser Achsversatz wird durch jeweils ein Zwischengetriebe unmittelbar am Radantrieb, dem sogenannten Portaltrieb, ermöglicht. Auf diese Weise können z.B. Fahrgäste möglichst bequem den Mittelgang über der Antriebsachse passieren.

Andererseits kann ein Achsversatz nach oben von Vorteil sein, beispielsweise bei Nutzfahrzeugen, da dadurch eine größere Bodenfreiheit des Fahrzeuges gewährleistet wird.

Im Rahmen der DE 3027806 wird eine Portalachse für Nahverkehrsbusse offenbart, bei der jedoch aufgrund des Aufbaus keine handelsübliche Scheibenbremse in das Achssystem integrierbar ist, wenn die Flurhöhe niedrig gehalten werden soll.

In der EP 0 877 672 B1 der Anmelderin ist eine Portalachse für ein Niederflurfahrzeug beschrieben, welche eine Integration von Scheibenbremsen ermöglicht. Dies wird dadurch erreicht, dass die Scheibenbremsen in das Portalsystem derart integriert werden, dass die Bremszylinder in dem Raum zwischen Portaltrieb, Radfelge, Reifen und Chassis senkrecht stehend und radial zur Bremsscheibenachse eingebaut sind. Hierbei erfolgt die Betätigung der Bremsen pneumatisch. Um den Zylinderhub auf die Bremsbeläge zu leiten, werden Umlenkhebel benötigt.

Bei dieser bekannten Konstruktion werden spezielle, für Portalachsen konzipierte Radialscheibenbremsen eingesetzt, welche kostenintensiv sind. Eine Verwendung von handelsüblichen und kostengünstigeren Axialscheibenbremsen, welche im LKW-Bereich üblich sind, ist nicht möglich, da zwischen den Tandembremszylindern eine bestimmte lichte Weite benötigt wird, um beispielsweise in einem Stadtbus eine Mindestgangbreite zu gewährleisten, welche mindestens 530 mm beträgt. Zudem wird Bauraum für die Rahmenstruktur sowie Freiraum für einen Wankwinkel von etwa 5° benötigt. Ein Tandembremszylinder in Axialbauweise baut zusätzlich länger als einfache Membranzylinder, ist jedoch für die Feststellbremsfunktion nötig.

Des weiteren sind die Axialscheibenbremsen nach dem Stand der Technik als Schwimmsattelbremsen ausgebildet, wodurch sich die lichte Weite zwischen den Bremszylindern um ca. 50 mm verringert, wenn Bremsbeläge und Bremsscheiben nah an der Verschleißgrenze sind.

Der vorliegenden Erfindung liegt die Aufgabe zugrunde, eine Portalachse für ein Niederflurfahrzeug anzugeben, in die kostengünstige Scheibenbremsen integrierbar sind, ohne die gewünschte Mindestgangbreite zu unterschreiten. Insbesondere soll nach der Integration des Bremssystems die geforderte Mindestgangbreite nicht unterschritten werden.

Diese Aufgabe wird durch die Merkmale des Patentanspruchs 1 gelöst. Weitere Ausgestaltungen und Vorteile gehen aus den entsprechenden Unteransprüchen hervor.

Demnach wird eine Portalachse vorgeschlagen, welche Axialscheibenbremsen in Festsattelbauart mit schwimmender Bremsscheibe umfasst.

Weiterhin weist die erfindungsgemäße Axialscheibenbremse ein verkleinertes Lüftspiel auf; dadurch kann der Stößel des Betriebsbremszylinders und der Stößel im Bremssattel verkürzt werden. Marktübliche Scheibenbremsen haben eine innere Übersetzung von ca. 15 bis 20 (Hub Bremszylinder/Verschiebeweg der Beläge). Somit wird die Baulänge des Sattels um ein Vielfaches der Verringerung des Lüftspiels verkürzt. Durch die erfindungsgemäße Konzeption wird der erforderliche Hub um mindestens 10 mm reduziert, was wiederum in einer Reduzierung der Baulänge von Bremssattel, Betriebsbremszylinder und wenn vorhanden dem Parkbremszylinder der Axialscheibenbremsen resultiert. Die dadurch erzielte Bauraumverkürzung der Bremse beträgt das Dreifache der Hubverkürzung. Dazu kommt der Entfall des Hubes von ca. 25 mm jedes Sattels bei vollem Verschleiß, da es sich um einen Festsattel handelt, bei welchem ein Freiraum für eine Verschleißbewegung nicht notwendig ist.

Alles in allem kann der nutzbare Freiraum zwischen linker und rechter Bremse (Sattel inklusive Zylinder) um mindestens 100 mm vergrößert werden, wodurch der Einsatz einer kostengünstigen Axialbremse auch mit Tandembremszylinder oder Membranzylinder im zur Verfügung stehenden Bauraum möglich wird.

In einer weiteren Ausgestaltungsform beinhaltet die Bremse eine elektrische Nachstellvorrichtung zum Nachstellen des Lüftspieles, wodurch das Lüftspiel zusätzlich eingeschränkt werden kann.

Die Erfindung wird im folgenden anhand der beigefügten Figuren beispielhaft näher erläutert. Es zeigen:
Figur 1: Eine Schnittansicht durch eine Portalachse mit Radialscheibenbremsen nach dem Stand der Technik; und
Figur 2: Eine Schnittansicht durch eine Portalachse mit Axialscheibenbremsen gemäß der vorliegenden Erfindung.

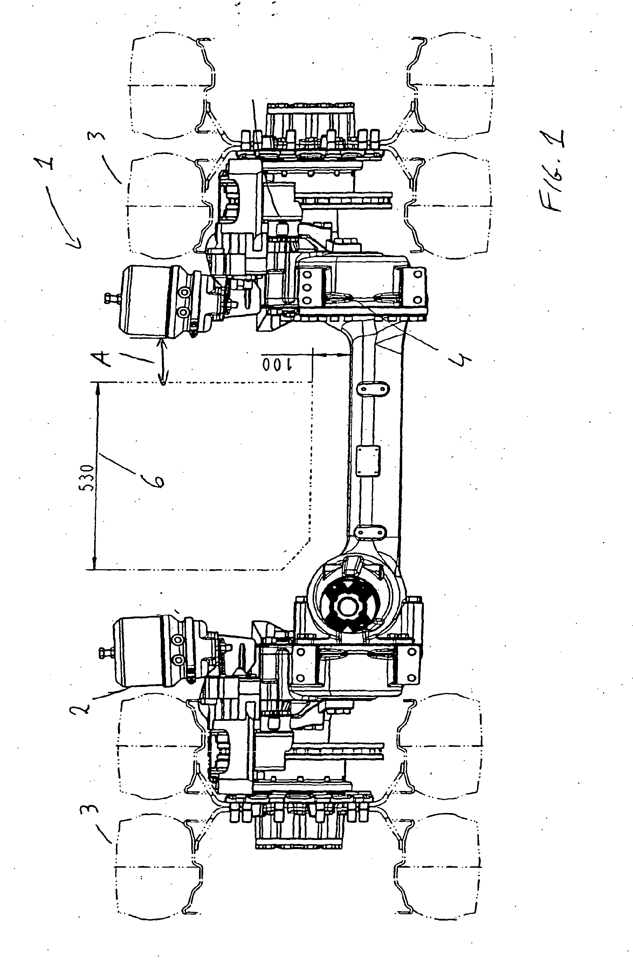

In Figur 1 ist Schnittansicht durch eine Portalachse 1 mit Radialscheibenbremsen 2 und Zwillingsbereifung gezeigt. Gezeigt werden die Reifen 3, der Portaltrieb 4. Die Verwendung der Radialscheibenbremsen 2 gewährleistet die Einhaltung der Mindestgangbreite 6, hier 530 mm. Das Maß A muß freigehalten weden für den Bremsenhub, Wankbewegung der Achse sowie Toleranzen. Wie bereits ausgeführt, erweist sich.diese Bauweise als kostenintensiv; zudem wird dadurch die Anzahl der benötigten Bauteile erhöht.

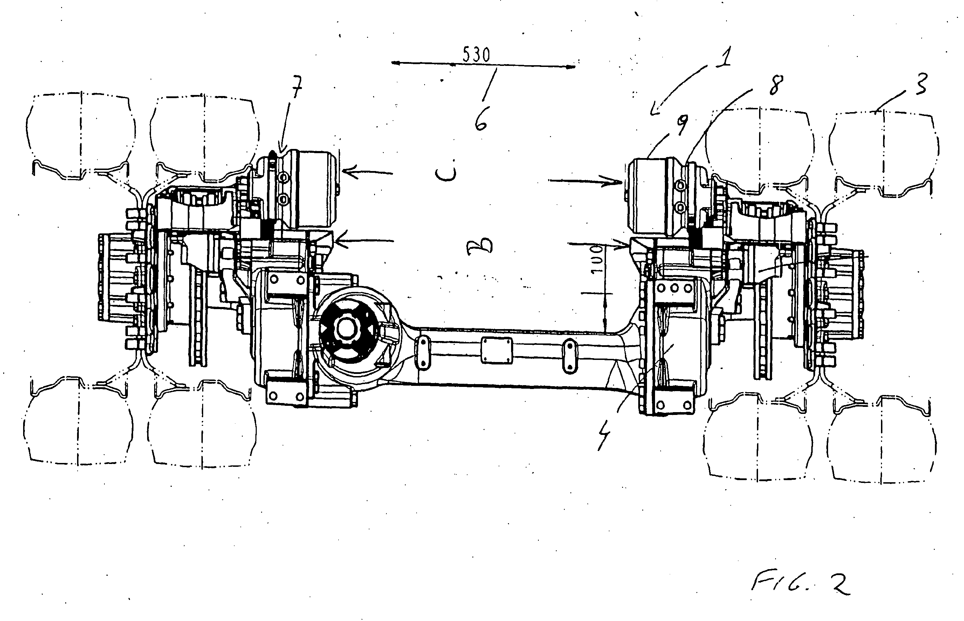

Gemäß der Erfindung werden in eine Portalachse gemäß Figur 2 für jeden Portaltrieb 4 Axialscheibenbremsen 7 integriert, welche in Festsattelbauart ausgebildet sind und eine schwimmende Bremsscheibe aufweisen. Die erfindungsgemäße Axialscheibenbremse 7 weist ein verkleinertes Lüftspiel auf, so dass der Betriebsbremszylinder 8 und der Parkbremszylinder 9 verkürzt werden können.

Durch die resultierende Bauraumverkürzung wird die Einhaltung der Mindestgangbreite 6 in vorteilhafter Weise gewährleistet. Diese ergibt sich aus dem Freiraum, der zwischen den Portaltrieben vorhanden ist. Zudem wird der erforderliche axiale Freiraum durch Hub oder Belagverschleiß nicht verkleinert.

### Bezugszeichen

- 1: Portalachse
- 2: Radialscheibenbremse
- 3: Reifen
- 4: Portaltrieb
- 6: Mindestgangbreite
- 7: Axialscheibenbremse
- 8: Betriebsbremszylinder
- 9: Parkbremszylinder

## Patentansprüche

1. Niederflurfahrzeugportalachse für Omnibusse, umfassend einen Portaltrieb (4), sowie eine Scheibenbremse (7) mit einer integrierten Bremsscheibe, einem Bremszylinder (8, 9) und einem Bremssattel, wobei der Bremszylinder außerhalb des Portaltriebes (4) angeordnet ist **dadurch gekennzeichnet, dass** die Scheibenbremse als Axialscheibenbremse (7) in Festsattelbauart mit schwimmender Bremsscheibe und verkleinertem Lüftspiel ausgebildet ist wobei Stößel des Bremszylinders (8) und des Bremssattels derart klein dimensioniert sind, dass der axiale Bauraum kurz gehalten wird, um eine vorgegebene Mindestgangbreite (6) des Fahrzeugs nicht zu unterschreiten.

2. Niederflurfahrzeugportalachse nach Anspruch 1, **dadurch gekennzeichnet, dass** die Axialscheibenbremse (7) mit einem Tandembremszylinder ausgeführt ist.

3. Niederflurfahrzeugportalachse nach Anspruch 1, **dadurch gekennzeichnet, dass** die Axialscheibenbremse (7) eine elektrische Nachstellvorrichtung aufweist, wodurch das Lüftspiel eingeschränkt werden kann.

## Claims

1. Low-floor vehicle portal axle for omnibuses, comprising a portal drive (4), and a disc brake (7) with an integrated brake disc, a brake cylinder (8, 9) and a brake calliper, the brake cylinder being arranged outside the portal drive (4), **characterized in that** the disc brake is configured as an axial disc brake (7) of fixed-calliper design with a floating brake disc and reduced air play, push rods of the brake cylinder (8) and of the brake calliper being dimensioned to be small in such a way that the axial installation space is kept short, in order not to undershoot a predefined minimum aisle width (6) of the vehicle.

2. Low-floor vehicle portal axle according to Claim 1, **characterized in that** the axial disc brake (7) is configured with a tandem brake cylinder.

3. Low-floor vehicle portal axle according to Claim 1, **characterized in that** the axial disc brake (7) has an electric adjusting apparatus, as a result of which the air play can be restricted.

## Revendications

1. Pont portique pour véhicule à plate-forme surbaissée pour autobus, comprenant un mécanisme de portique (4) ainsi qu'un frein à disque (7) avec un disque de frein intégré, un cylindre de frein (8, 9) et un étrier de frein, le cylindre de frein étant disposé en dehors du mécanisme de portique (4), **caractérisé en ce que** le frein à disque est réalisé sous forme de frein à disque axial (7) de construction à étrier fixe avec un disque de frein flottant, et avec un jeu réduit, les poussoirs du cylindre de frein (8) et de l'étrier de frein étant de petites dimensions, de telle sorte que l'espace de construction axial reste court, afin de ne pas descendre en dessous d'une largeur de passage minimale prédéfinie (6) du véhicule.

2. Pont portique pour véhicule à plate-forme surbaissée selon la revendication 1, **caractérisé en ce que** le frein à disque axial (7) est réalisé avec un cylindre de frein en tandem.

3. Pont portique pour véhicule à plate-forme surbaissée selon la revendication 1, **caractérisé en ce que** le frein à disque axial (7) présente un dispositif de réglage électrique, de sorte que le jeu puisse être réduit.
